(19) Europäisches Patentamt

European Patent Office

Office européen des brevets

(11) Veröffentlichungsnummer: **0 282 048 B1**

(12) **EUROPÄISCHE PATENTSCHRIFT**

(45) Veröffentlichungstag der Patentschrift: **31.07.91**

(21) Anmeldenummer: **88103760.0**

(22) Anmeldetag: **10.03.88**

(51) Int. Cl.⁵: **B07B 4/02**

(54) **Vorrichtung zur Wiederaufbereitung von Recyclingstoffen, vorzugsweise Bauschutt.**

(30) Priorität: **13.03.87 DE 3708180**

(43) Veröffentlichungstag der Anmeldung:
**14.09.88 Patentblatt 88/37**

(45) Bekanntmachung des Hinweises auf die
Patenterteilung:
**31.07.91 Patentblatt 91/31**

(84) Benannte Vertragsstaaten:
**BE DE FR GB IT NL**

(56) Entgegenhaltungen:
**DE-A- 2 929 142**
**US-A- 4 680 107**

(73) Patentinhaber: **O & K Orenstein & Koppel Aktiengesellschaft**

**W-1000 Berlin(DE)**

(72) Erfinder: **Hauri, Thomas, Dipl.-Ing.**
**Schleebergstrasse 7**
**W-4722 Ennigerloh(DE)**
Erfinder: **Pröpper, Hans-Günter**
**Eschenweg 4**
**W-4750 Unna(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Sichten von mit Verunreinigungen versehenen Recyclingstoffen, insbesondere Bauschutt, in einem Sichtluftstrom, der von einem außerhalb eines Sichtraumes angeordneten Ventilator erzeugt und im Kreislauf bewegt wird, indem die Recyclingstoffe von oben in den Sichtraum aufgegeben und mindestens einer unterhalb der Aufgabestelle angeordneten Ausblasdüse zugeführt werden, wobei grobere Fraktionen nach unten fallen und feinere Fraktionen im etwa quer zur Bewegungrichtung der Recyclingstoffe verlaufenden Luftstrom einer Sammelkammer zuführbar sind.

Um Bauschutt oder andere Recyclingstoffe, die körnig bis stückig sind sowie Verunreinigungen enthalten, einer Wiederaufbereitung zu unterziehen und erneut verwenden zu können, sind verschiedene Verfahren bekannt. Neben Naßaufbereitungsverfahren, bei denen die Reinigung oder Entsorgung des für den Aufbereitungsprozeß verwendeten Wassers Schwierigkeiten bereitet, sind Trockenverfahren der eingangs beschriebenen Art bekannt, bei denen nach einer Zerkleinerung und Zerlegung der Recyclingstoffe in unterschiedliche Fraktionen eine Sichtung mittels Sichtluft erfolgt, durch die die Verunreinigungen aus den Recyclingstoffen ausgeschieden werden. Bei diesen bekannten Trockenverfahren wird das zu sichtende Material von oben her einem Sichtraum aufgegeben, der von unten nach oben von der Sichtluft durchströmt wird. Auf diese Weise erfolgt ein Sichten im Gegenstrom, und zwar über den gesamten Strömungsquerschnitt des Sichtraumes.

Diese bekannten Vorrichtungen haben verschiedene Nachteile. Zum einen muß die Sichtluft mit ausreichend großer Geschwindigkeit im Sichtraum nach oben strömen, um die Verunreinigungen aufgrund ihres geringeren spezifischen Gewichtes und/oder ihrer größeren Anblasfläche nach oben auszutragen. Dies erfordert nicht nur einen hohen Energieaufwand, sonder birgt die Gefahr, daß auch wiederverwendbare Bestandteile der Recyclingstoffe mit den Verunreinigungen nach oben aus dem Sichtraum ausgetragen werden. Die Einstellung der Sichtgrenze ist deshalb bei diesen bekannten Vorrichtungen schwierig. Schließlich besitzen sie den Nachteil, daß die gesamte Sichtluft in nachgeschalteten Filtern entstaubt werden muß, weil es aufgrund der Gegenstromsichtung unvermeidbar ist, daß sich eine hohe Staubbelastung der Sichtluft ergibt.

Der DE-A-29 29 142 sind ein Verfahren sowie eine Vorrichtung zum Sichten von grobkörnigem Gut in einem Horizontalsichtstrom zu entnehmen. Das zu sichtende Gut, insbesondere Müll, word von oben aufgegeben, wobei die einzelnen Gutbestandteile - abhängig von ihrer Schwere und Größe - unterschiedliche Flugbahnen beschreiben und auf diese Weise gesichtet werden. Das in den durch einen Ventilator erzeugten Horizontalsichtstrom aufzugebende Gut wird vor seinem Auftreffen einer vorgegebenen Vertikalbeschleunigung unterzogen und trifft mit einer bestimmten Geschwindigkeit auf den Sichtluftstrom auf. Der Sichtraum ist hierbei zylindrisch ausgebildet und mit mehreren am Boden vorgesehenen, voneinander beabstandeten Auslauföffnungen versehen. Eine sich am freien Ende des Sichtraumes anschließende nach oben gerichtete Abdeckhaube führt zu einem Zyklon, der die Abdeckhaube mit Unterdruck beaufschlagt. Der Zyklon ist über seine Abluftleitung mit der Ansaugseite eines Gebläses verbunden, das die Sichtluft erzeugt. Zur Homogenisierung des Luftstromes ist im Bereich der Aufgabestelle des Sichtgutes eine perforierte Verteilerplatte angeordnet. Die Nachteile dieser Vorrichtung sind im wesentlichen darin begründet, daß einerseits ein verhältnismäßig hoher Luftbedarf notwendig ist, um den Quer-schnitt des Sichtraumes gleichmäßig mit Sichtluft zu beaufschlagen und andererseits durch die vorgesehene perforierte Verteilerplatte ein hoher Strömungswiderstand mit entsprechenden Verwirbelungen erzeugt wird. Zum Zwecke der Trennung des Sichtgutes in verschiedene Fraktionen, muß der Sichtraum axial relativ lang bauend ausgebildet werden, so daß die durch das Gebläse erzeugte Sichtluft nicht ausreicht, um den mit Feinpartikeln beladenen Sichtluftstrom in den Zyklon zu fördern. Dies muß durch die Unterdruckwirkung des Zyklones vollzogen werden. Funktion und Arbeitsweise dieser Vorrichtung sind somit als aufwendig anzusehen, wobei der Wirkungsgrad, insbesondere bei der Trennung der feineren Fraktionen im Hinblick auf die langen Förderwege als verhältnismäßig gering angesehen werden kann.

Der Erfindung liegt ausgehend von der DE-A-29 29 142 die Aufgabe zugrunde, eine Vorrichtung der eingangs beschriebenen Art derart weiterzubilden, daß sich mit erheblich geringerem Energieaufwand eine einwandfreie Trennung zwischen den einzelnen Fraktionen der Recyclingstoffe und den Verunreinigungen ergibt, die ihrerseits wiederum zwecks Weiterverarbeitung oder Verbrennung klassiert werden können.

Diese Aufgabe wird durch die Kombination folgender Merkmale gelöst:

- unterhalb der Aufgabestelle sind mindestens zwei mit Abstand zueinander angeordnete Ausblasdüsen vorgesehen.
- die Ausblasdüsen sind hinsichtlich ihrer Ausblasrichtung und/oder ihres Ausblasquerschnittes verstellbar
- der Luftstrom ist auf eine in der gegenüberliegenden Wand der Sichtkammer vorgesehene Öffnung ausgerichtet, an die sich eine, ein größeres Volumen als der Sichtraum aufweisende Sichtluft-Entspannungskammer anschließt.

Vorteilhafte Weiterbildungen des Erfindungsgegenstandes sind den Unteransprüchen zu entnehmen.

Durch diese erfindungsgemäße Ausbildung ergibt sich eine Vorrichtung, die bei geringem technischen Aufwand ein zuverlässiges Ausscheiden von Verunreinigungen ermöglicht, ohne daß ein großer Energieaufwand getrieben werden muß, weil die Verunreinigungen nicht im Gegenstromverfahren ausgetragen werden, sondern durch seitliches Austragen aus dem Sichtraum, das erheblich geringere Luftgeschwindigkeiten erfordert. Nach dem Eintritt der mit den Verunreinigungen beladenen Sichtluft in die SichtluftEntspannungskammer fallen die Verunreinigungen in dieser Kammer nach unten, so daß sie aus der dort angeordneten Austragsöffnung entfernt werden können, während die Sichtluft zur Rückführung in den Sichtprozeß bereitsteht. Um auch längliche Verunreinigungen, wie beispielsweise Holzstücke durch das seitliche Ausblasen nicht nur beim Herabfallen zu drehen, sondern sicher seitlich auszutragen, werden mindestens zwei Ausblasdüsen im Abstand voneinander unterhalb der Aufgabe im Sichtraum vorgesehen. Diese Ausblasdüsen erfassen auch längliche Verunreinigungen zuverlässig. Die Ausblasdüsen können hinsichtlich ihrer Ausblasrichtung und/oder ihres Ausblasquerschnittes verstellbar ausgeführt werden, um die Sichtwirkung einstellen und an unterschiedliche Aufgabematerialien anpassen zu können.

Gemäß einem weiteren Merkmal der Erfindung kann mindestens der untere Teil der Öffnung im Übergang zwischen Sichtraum und Sichtluft-Entspannungskammer durch verstellbare Leitbleche gebildet werden. Auch hierdurch ist eine gute Anpassung des Sichtergebnisses an die jeweils herrschenden Gegebenheiten möglich, da der Austragsquerschnitt und der untere Rand der Öffnung durch Verstellen der Leitbleche an die jeweils herrschenden Verhältnisse angepaßt werden können.

Bei einer bevorzugten Ausführungsform der Erfindung ist die Sichtluft-Entspannungskammer zur Bildung eines im wesentlichen geschlossenen Sicht-luftkreislaufes mittels eines Luftkanals mit dem Ventilator verbunden. Hierdurch wird eine weitere Energieeinsparung erreicht und vermieden, daß große Mengen von Abluft gereinigt werden müssen. Um auch die im geschlossenen Kreislauf umgewälzte Sichtluft zu reinigen, wird mit der Erfindung schließlich vorgeschlagen, in einem parallel zum Luftkanal verlaufenden Abzweigkanal für eine Teil der umgewälzten Sichtluft einen Staubfilter anzuordnen.

Auf der Zeichnung ist ein Ausführungsbeispiel der erfindungsgemäßen Vorrichtung dargestellt, und zwar zeigen:

Figur 1.      eine Seitenansicht der Vorrichtung,

Figur 2.      eine Draufsicht der Vorrichtung nach Figur 1,

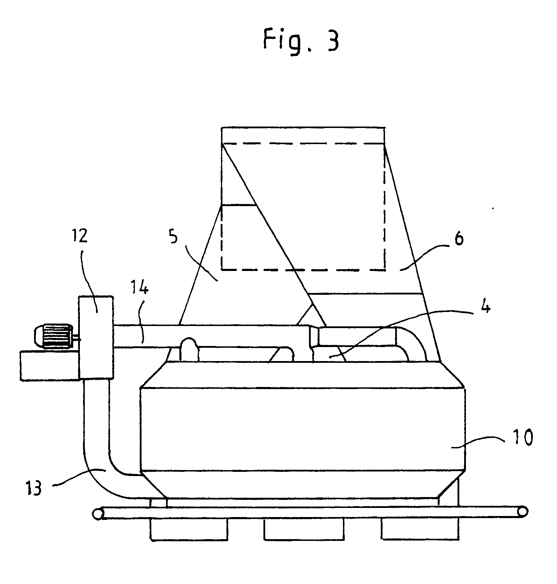

Figur 3.      eine Stirnansicht der Vorrichtung nach den Figuren 1 und 2,

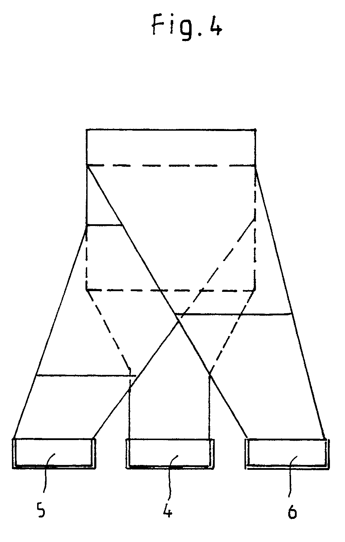

Figur 4.      einen senkrechten Schnitt gemäß der Schnittlinie IV - IV in Figur 1 und

Figur 5.      einen senkrechten Schnitt gemäß der Schnittlinie V - V in Figur 2 in vergrößerter Darstellung.

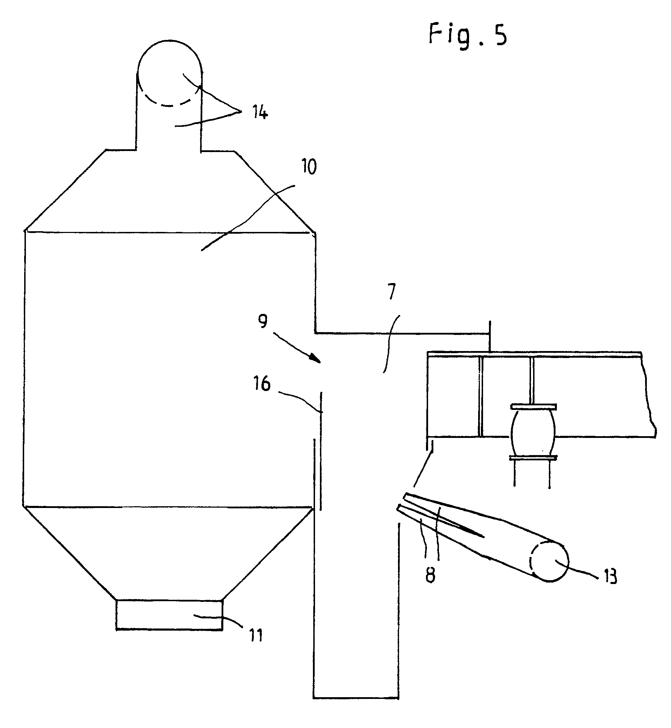

Die anhand eines Ausführungsbeispieles dargestellte Vorrichtung zur Wiederaufbereitung von Recyclingstoffen umfaßt ein Schwingsieb 1, dem das aufzubereitende Material über ein Transportband 2 zugeführt wird. Im Schwingsieb 1 wird das aufgegebene Material beim Ausführungsbeispiel in vier Fraktionen zerlegt, beispielsweise in eine erste Fraktion mit maximalen Abmessungen zwischen 0 und 8 mm, eine zweite Fraktion mit Abmessungen 8 und 16 mm, eine dritte Fraktion mit Abmessungen zwischen 16 und 32 mm und eine vierte Fraktion mit Abmessungen über 32 mm. Von diesen vier Fraktionen wird die erste Fraktion aus dem trichterförmigen Auslauf 3 des Schwingsiebes 1 unmittelbar abgezogen. Die zweite Fraktion gelangt in einen mittleren Auslaufkanal 4, die dritte Fraktion in einen seitlichen Auslaufkanal 5 und die vierte Fraktion ebenfalls in einen seitlichen Auslaufkanal 6. Diese in einen waagerechten Abschnitt übergehenden Kanäle 4,5 und 6 führen die drei gröberen Faktionen bei gleichzeitiger Vergleichmäßigung der Schichtdicke mittels der als Schwingförderer ausgebildeten Kanalabschnitte jeweils einem Sichtraum 7 zu, der in vergrößerter Schnittdarstellung in Figur 5 gezeichnet ist.

Wie aus dieser Darstellung hervorgeht, sind im Sichtraum 7 unterhalb der Aufgabe für das Sichtgut beim Ausführungsbeispiel jeweils zwei über die gesamte Sichtraumbreite verlaufende Ausblasdüsen 8 für die Sichtluft angeordnet. Diese Ausblasdüsen 8 sind quer zur Bewegungsrichtung des in den Sichtraum 7 herabfallenden Sichtgutes und auf eine in der gegenüberliegenden Wand des Sichtraumes 7 ausgebildete Öffnung 9 ausgerichtet. Über diese Öffnung 9 wird der Sichtraum 7 mit einer SichtluftEntspannungskammer 10 verbunden, die unten mit einer Austragsöffnung 11 versehen ist.

Durch die Ausblasdüsen 8 wird jeweils ein Sichtluftstrahl ausgeblasen, der von einem Ventilator 12 erzeugt und über Druckleitungen 13 den Ausblasdüsen 8 zugeführt wird. Durch diese Sichtluftstrahlen werden die in den drei gröberen Fraktionen enthaltenen Verunreinigungen, insbesondere Holz und Kunststoffteile seitlich ausgelenkt. Während die Fraktionen im jeweiligen Schacht des Sichtraumes 7 nach unten fallen und über getrennte Transportbänder abgeführt werden, gelangen auf diese Weise die Verunreinigungen mit der Sichtluft in die Sichtluft-Entspannungskammer 10. Da in dieser Sichtluft-Entspannungskammer 10 augrund des größeren Volumens die Luftgeschwindigkeit erheblich absinkt, fallen in dieser SichtluftEntspannungskammer 10 die Verunreinigungen aus der Sichtluft aus, so daß sie über die Austragsöffnung 11 abgezogen werden können. Die auf diese Weise von Verunreinigungen befreite Sichtluft wird über eine Ansaugleitung 14 im geschlossenen Kreislauf zum Ventilator 12 zurückgeführt.

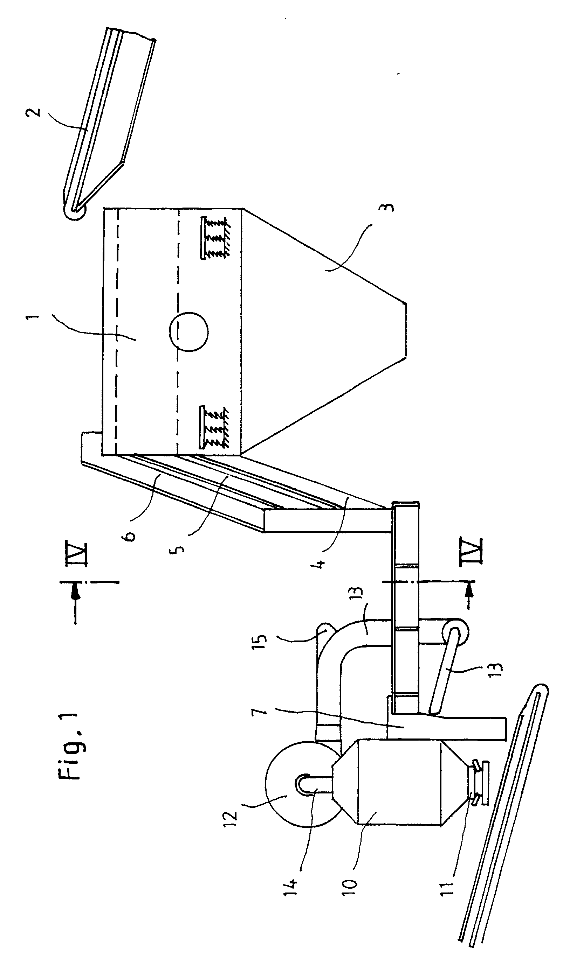

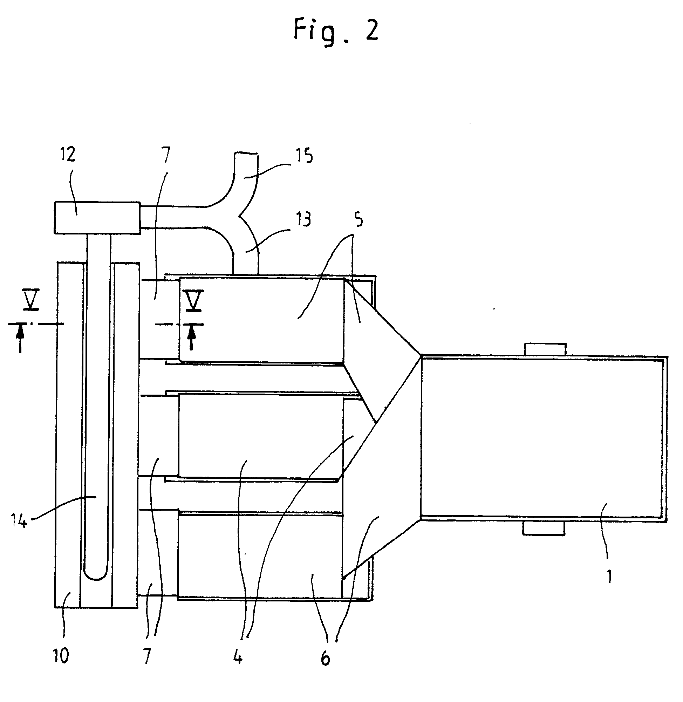

Wie aus den Figuren 1 und 2 hervorgeht, kann ein Teilstrom der im geschlossenen Kreislauf umgewälzten Sichtluft aus der Druckleitung 13 abgezweigt und über die Filterleitung 15 einem auf der Zeichnung nicht dargestellten Staubfilter zugeführt werden. Die entstaubte Sichtluft kann entweder ins Freie abgeblasen oder in den Kreislauf zurückgeführt werden. Im letztgenannten Fall stellt die Filterleitung 15 den Abzweigkanal eines Bypasssystems dar.

Die Figur 5 zeigt, daß der untere Teil der Öffnung 9 im Übergang zwischen dem Sichtraum 7 und der Sichtluft-Entspannungskammer 10 durch ein Leitblech 16 gebildet wird, das zur Veränderung des Öffnungsquerschnittes in der Höhe verstellbar ist, so daß die Vorrichtung optimal an das jeweils zu verarbeitende Material angepaßt werden kann.

Bezugsziffernliste:

| 1 | Schwingsieb |
| 2 | Transportband |
| 3 | Auslauf |
| 4 | Auslaufkanal |
| 5 | Auslaufkanal |
| 6 | Auslaufkanal |
| 7 | Sichtraum |
| 8 | Ausblasdüse |
| 9 | Öffnung |
| 10 | Sichtluft-Entspannungskammer |
| 11 | Austragöffnung |
| 12 | Ventilator |
| 13 | Druckleitung |
| 14 | Ansaugleitung |
| 15 | Filterleitung |
| 16 | Leitblech |

**Patentansprüche**

1. Vorrichtung zum Sichten von mit Verunreinigungen versehenen Recyclingstoffen, insbesondere Bauschutt, in einem Sichtluftstrom, der von einem außerhalb eines Sichtraumes (7) angeordneten Ventilator (12) erzeugt und im Kreislauf bewegt wird, indem die Recyclingstoffe von oben in den Sichtraum (7) aufgegeben und mindestens einer unterhalb der Aufgabestelle angeordneten Ausblasdüse (8) zugeführt werden, wobei grobere Fraktionen nach unten fallen und feinere Fraktionen im etwa quer zur Bewegungsrichtung der Recyclingstoffe verlaufenden Luftstrom einer Sammelkammer (10) zuführbar sind, gekennzeichnet durch die Kombination folgender Merkmale:

   - unterhalb der Aufgabestelle sind mindestens zwei mit Abstand zueinander angeordnete Ausblasdüsen (8) vorgesehen.
   - die Ausblasdüsen (8) sind hinsichtlich ihrer Ausblasrichtung und/oder ihres Ausblasquerschnittes verstellbar
   - der Luftstrom ist auf eine in der gegenüberliegenden Wand der Sichtkammer (7) vorgesehene Öffnung ausgerichtet, an die sich eine, ein größeres Volumen als der Sichtraum (7) aufweisende Sichtluft-Entspannungskammer (10) anschließt.

2. Vorrichtung nach Anspruch 1, dadurch gekennzeichnet, daß mindestens der untere Teil der Öffnung (9) im Übergang zwischen Sichtraum (7) und Sichtluft-Entspannungskammer (10) durch verstellbare Leitbleche gebildet ist.

3. Vorrichtung nach Anspruch 1 oder 2, dadurch gekennzeichnet, daß die Sichtluft-Entspannungskammer (10) zur Bildung eines im wesentlichen geschlossenen Sichtluftkreislaufes mittels eines Luftkanals (14) mit dem Ventilator (12) verbunden ist.

4. Vorrichtung nach Anspruch 3, dadurch gekennzeichnet, daß in einem parallel zum Luftkanal (13) verlaufenden Abzweigkanal (15) für einen Teil der umgewälzten Sichtluft ein Staubfilter angeordnet ist.

**Claims**

1. Device for screening recycling materials, especially debris, containing impurities, in a screening air stream, which is produced by a fan (12) arranged outside a screening chamber (7) and is moved in a circuit, while the recycling materials are fed into the screening chamber (7) from above and are conveyed to at least one blower nozzle (8) arranged below the delivery point, coarser fractions dropping downwards and finer fractions being able to be conveyed in the air stream, flowing approximately transversely to the direction of movement of the recycling materials, to a collecting chamber (10), characterised by the combination of the following features:

- below the delivery point, at least two blower nozzles (8) are provided which are arranged at a distance from one another.
- the blower nozzles (8) are adjustable with regard to their blowing direction and/or their blower cross-section.
- the air flow is directed towards an opening which is provided in the opposite wall of the screening chamber (7) and which is adjoined by a screening air expansion chamber (10) having a greater volume than the screening chamber (7).

2. Device according to Claim 1, characterised in that at least the lower part of the opening (9) in the transition between the screening room (7) and the screening air expansion chamber (10) is formed by adjustable guide plates.

3. Device according to Claim 1 or 2, characterised in that the screening air expansion chamber (10) is connected to the fan (12) by means of an air duct (14) in order to form a substantially closed screening air circuit.

4. Device according to Claim 3, characterised in that a dust filter is arranged in a branch duct (15) running parallel to the air duct (13) for a part of the circulated screening air.

**Revendications**

1. Dispositif pour trier des matières à recycler pourvues d' impuretés, en particulier des gravats, dans un courant d'air de triage produit et animé d'une circulation par un ventilateur (12) installé à l'extérieur d'un espace de triage (7), dispositif dans lequel les matières à recycler sont chargées d'en haut dans l'espace de triage (7) et sont amenées à au moins une tuyère (8) placée sous le point de chargement, de manière que les fractions plus grossières tombent et que les fractions plus fines puissent être amenées à une chambre collectrice (10) puissent dans le courant d'air, lequel est à peu près perpendiculaire à la direction de mouvement des matières à recycler, caractérisé par la combinaison des moyens suivants:

- au moins deux tuyères (8) sont placées à distance l'une de l'autre au-dessous du point de chargement;
- les tuyères (8) sont réglables quant à leur direction de soufflage et/ou leur section de soufflage; et
- le courant d'air est dirigé sur une ouverture prévue dans la paroi opposée de l'espace de triage (7), à laquelle se raccorde une chambre de détente (10) de l'air de triage, ayant un plus grand volume que l'espace de triage (7).

2. Dispositif selon la revendication 1, caractérisé en ce que la partie inférieure au moins de l'ouverture (9), dans la transition entre l'espace de triage (7) et la chambre de détente (10) pour l'air de triage, est formée par des chicanes réglables.

3. Dispositif selon la revendication 1 ou 2, caractérisé en ce que la chambre de détente (10) pour l'air de triage est reliée par un canal d'air (14) au ventilateur (12) en vue de la formation d'un circuit essentiellement fermé pour l'air de triage.

4. Dispositif selon la revendication 3, caractérisé en ce qu'un filtre dépoussiéreur pour une partie de l'air de triage recyclé est installé dans un canal de dérivation (15) parallèle au canal d'air (13).

Fig. 1

Fig. 2

# Fig. 3

Fig. 4

5    4    6

Fig.5